Europäisches Patentamt

European Patent Office

Office européen des brevets

(19)

(11)  **EP 1 002 015 B1**

(12)  **FASCICULE DE BREVET EUROPEEN**

(45) Date de publication et mention
de la délivrance du brevet:
**03.08.2005  Bulletin 2005/31**

(51) Int Cl.⁷:  **C08L 23/04**, C08L 23/10,
C08K 3/00, C08J 5/18

(21) Numéro de dépôt: **98939443.2**

(86) Numéro de dépôt international:
**PCT/BE1998/000120**

(22) Date de dépôt: **06.08.1998**

(87) Numéro de publication internationale:
**WO 1999/007784 (18.02.1999 Gazette 1999/07)**

(54)  **REVETEMENTS DE SOLS, DE MURS, OU PRODUITS D'INSONORISATION OBTENUES AU DEPART DE MATIERES PLASTIQUES CHARGES**

BODEN-, WANDBEDECKUNG ODER SCHALLDÄMPFENDE PRODUKTE AUS GEFÜLLTEN POLYMERMATERIALIEN

FLOOR, WALL COATINGS OR SOUND DAMPING PRODUCTS OBTAINED FROM FILLED POLYMER MATERIALS

(84) Etats contractants désignés:
**AT BE CH DE DK ES FI FR GB GR IE IT LI LU NL PT SE**

(30) Priorité:  **07.08.1997  EP 97870115**

(43) Date de publication de la demande:
**24.05.2000  Bulletin 2000/21**

(73) Titulaire: **Tarkett Sommer S.A.**
**92748 Nanterre Cedex (FR)**

(72) Inventeurs:
• **VIET DAO, Dung**
**B-4920 Aywaille (BE)**

• **BASTIN, Pierre**
**B-6600 Bastogne (BE)**

(74) Mandataire: **Van Malderen, Michel et al**
**Office van Malderen**
**85/043 Boulevard de la Sauvenière**
**4000 Liège (BE)**

(56) Documents cités:
**EP-A- 0 572 034**          **WO-A-97/26297**
**US-A- 4 438 228**

**Description**

**Objet de l'invention**

La présente invention concerne des revêtements de sols, de murs, ou produits d'insonorisation obtenus au départ de « compounds », c'est-à-dire des mélanges de matières plastiques qui sont chargés de matières généralement minérales inertes telles que la craie ou la baryte et qui peuvent être mis en oeuvre directement par calandrage ou extrusion, notamment pour former des feuilles ou des films servant de revêtements de sols ou de murs ou pour former des garnitures intérieures de véhicules réalisées par thermoformage ou encore pour des produits d'insonorisation.

**Arrière-plan technologique**

Jusqu'à présent, le polychlorure de vinyle (PVC) plastifié a été largement utilisé tant pour la réalisation de revêtements de sol que pour la production de produits d'insonorisation dans le secteur automobile. Ceci résulte essentiellement du fait que les PVC plastifiés présentent d'excellentes caractéristiques de comportement mécanique, aussi bien à basse température (par exemple jusqu'à des températures de l'ordre de -20°C) qu'à haute température (par exemple à 70°C).

Pour diverses raisons, essentiellement écologiques, on cherche à substituer tant la résine (PVC) que son plastifiant (par exemple le phtalate de di-octyle ou DOP) par des produits sans chlore, avec ou sans addition d'huiles raffinées.

Il est logique de s'orienter vers les polyoléfines telles que la famille des polyéthylènes.

Afin de diminuer les coûts matières et/ou de réduire les quantités de déchets produits dans différents sites industriels, dans la production de produits du type revêtements de sols ou dans des produits d'insonorisation qui sont généralement thermoformés pour des applications automobiles (garnitures intérieures de véhicules) où on utilise généralement des compounds chargés, on a proposé d'introduire des polyoléfines à faible valeur ajoutée telles que les polyéthylènes basse densité (LDPE), les polyéthylènes linéaires basse densité (LLDPE), les polyéthylènes de très basse densité (VLDPE) ou encore le polypropylène (PP). Ces produits sont mis en oeuvre directement à l'état vierge en provenance du producteur ou proviennent de déchets résultant de production industrielle de produits comprenant ces matières. Il peut par exemple s'agir de déchets d'emballages contenant essentiellement ces types de produits. Il peut encore s'agir, par exemple, de déchets de moquettes qui contiennent par exemple un mélange de fibres de polypropylène, de polyamide et de polyester.

Il convient de garder à l'esprit que des compounds de ce type sont mis en oeuvre généralement par calandrage ou extrusion, et que le choix des matières doit être tel que ces opérations de calandrage ou d'extrusion et les opérations ultérieures soient réalisables dans de bonnes conditions.

Cependant, les polymères du type polyéthylène haute densité (HDPE) ne conviennent pas, tout au moins pas en grande quantité, dans des compounds, car leur cristallinité, qui est particulièrement élevée, confère au produit des rigidités trop importantes pour les applications envisagées. En outre, le produit devient rapidement trop fragile.

Une autre conséquence de la trop forte cristallinité est qu'il est impossible de plastifier ces résines du fait que la cristallisation rejette les substances qui ne peuvent pas cristalliser avec le polymère. On observe que donc les huiles plastifiantes et les additifs du type lubrifiants sont rejetés par suite de la cristallisation, ce phénomène étant qualifié d'exsudation.

Les produits finis sont donc rapidement « gras », ce qui rend impossible la mise sur le marché d'un produit acceptable. Ce caractère gras résultant de l'exsudation rend également impossible la réalisation d'un produit du type multicouche avec une autre feuille, les adhérences entre les couches étant médiocres.

On observe également qu'une cristallisation élevée lors du refroidissement ultérieur à la mise en oeuvre à l'état fondu initie des problèmes de stabilité dimensionnelle des pièces produites, se traduisant notamment par des retraits ou des gauchissements importants.

On a donc cherché à diminuer la cristallinité des polyéthylènes HDPE en ayant recours à des polyéthylènes de plus basse densité du type LDPE ou LLDPE.

Bien que ceci permette de réduire fortement la cristallinité, l'effet obtenu dans la majorité des cas n'est pas suffisant, le produit restant fragile et rigide, et présentant trop de retrait ou étant marqué par une exsudation prononcée.

Une autre approche pour résoudre ces problèmes est le recours à la copolymérisation, qui permet encore de réduire la cristallinité.

C'est ainsi que les produits de copolymérisation du type : EVA (polymère éthylène-acétate de vinyle) donnent des produits dont les avantages sont entre autres la réduction de la cristallinité, l'assouplissement, une capacité accrue d'absorption de charges et une capacité accrue d'absorption de plastifiants ou de lubrifiants, toutes propriétés qui sont particulièrement importantes pour l'application envisagée.

Ces avantages sont cependant liés à une série d'inconvénients parmi lesquels on peut citer la réduction de la tenue mécanique à chaud, traduite par une chute du point Vicat, un risque de décomposition à haute température avec formation d'acide acétique malodorant, phénomène qui est souvent amorcé lors d'un choc thermique à 200 °C par exemple. De plus, le prix de ce type de copolymère est nettement plus élevé que celui des produits du type HDPE, LDPE et LLDPE.

On observe que les éthylènes copolymérisés avec des quantités croissantes d'alcène (par exemple du type propène, butène, pentène, hexène, octène, ...) font évoluer la résine depuis les propriétés que l'on observe pour un HDPE vers celles connues pour le LLDPE et jusqu'à VLDPE.

Pour certaines applications, les LLDPE et VLDPE sont encore trop rigides, parce que trop cristallins, et ils ne peuvent donc convenir tels quels aux applications pour lesquelles on utilise actuellement du PVC plastifié chargé.

Les mêmes difficultés et explications du phénomène déjà invoquées dans le cas du LDPE s'observent également pour le LLDPE, et on peut d'ailleurs noter que le marché d'utilisation des LDPE et des LLDPE sont très semblables. On peut donc envisager un mélange LLDPE-EVA (en tenant compte cependant du prix élevé de ce dernier constituant), ou encore chercher à augmenter la souplesse intrinsèque des LLDPE en augmentant la proportion du comonomère au-delà de ce qui a été réalisé pour les LLDPE. On obtient dans ce cas les produits qualifiés de VLDPE, dont la densité varie par exemple entre 0,880 et 0,915. Ces VLDPE ont des comportements proches de celui des EVA, avec un certain nombre d'avantages supplémentaires parmi lesquels on peut citer une meilleure tenue à la chaleur (point Vicat plus élevé), un risque réduit de décomposition lors de la mise en oeuvre ou lors d'une utilisation dans des conditions de contraintes thermiques élevées. De plus, ils sont moins chers que les EVA.

On observe cependant que les VLDPE admettent généralement moins de charges que les EVA très souples.

On peut alors conclure que l'on peut améliorer les caractéristiques souhaitées par des mélanges du type LLDPE-EVA ou VLDPE-EVA qui peuvent être chargés et éventuellement plastifiés et/ou lubrifiés, que les compounds sont relativement aisés à mettre en oeuvre, c'est-à-dire que leur fusion et leur homogénéisation peuvent être obtenues par une méthode continue (extrudeuse continue) ou discontinue (mélangeur interne type Banbury) et que leur extrusion ou calandrage est aisé. Un choix approprié des mélanges permet de résoudre la plupart des problèmes liés à la mise en oeuvre (par calandrage ou extrusion), à la flexibilité, à la tenue au froid, à la tenue au chaud (aussi bien pour ce qui concerne la tenue mécanique que la dégradation), à la résistance à la déchirure et à la déformabilité et au retrait, mais il est souvent difficile de concilier tous ces paramètres en maîtrisant le coût.

Les résultats ne sont donc pas encore totalement satisfaisants à tous égards.

Des produits du type metallocènes et leurs procédés de fabrication sont décrits dans le document US-A-5 272 236-A (incorporé à la présente demande par référence). Ils sont destinés à la réalisation entre autres de films, de fibres et d'objets moulés, éventuellement avec d'autres polyoléfines du type HDPE et/ou LLDPE. La nature et l'utilisation de tels films ne sont pas précisées.

Le document EP 0 572 034-A décrit des produits semblables pour la production de films, feuilles, objets moulés et câbles, en particulier des feuilles pour l'emballage. Il est précisé dans ce document que des charges peuvent être incorporées dans ces produits.

Le document WO-97/26297-A indique la possibilité de produire un mélange de polymères du type métallocène avec des plastomères polyoléfiniques et des huiles naphténiques ou paraffiniques ainsi que des charges.

Eventuellement, des matières recyclées et des polymères diluants, en une teneur qui est de préférence inférieure à 50% en poids peuvent y être ajoutés. Leur utilisation est similaire aux applications mentionnées par le document précédent.

Des formulations contenant des interpolymères essentiellement linéaires d'éthylène avec des $\alpha$-oléfines $C_{30}$-$C_{20}$, des polyoléfines de 0,1 à 80% de charges sont décrites dans le document US-5 576 374-A. Ces produits servent au moulage par injection et par soufflage ou par extrusion.

Dans le document WO 96/04419, on propose des produits de revêtement de sols. Ces produits sont constitués de polyalkènes à distribution relativement étroite de masse moléculaire et d'une charge. Les polyalkènes peuvent être « étendus » par d'autres résines polymériques. Les produits sont mis en oeuvre par calandrage classique, calandrage ou enduction à chaud ou extrusion.

Le document mentionne la possibilité théorique de la présence de 50 à 60 pcr (pourcentage en poids exprimé par rapport à la quantité totale de résines) de telles autres résines.

La présence possible de polyoléfines à raison de 10 à 30 pcr, en plus des produits de base MPO, est mentionnée. Aucun exemple ne mentionne cependant, ni la mise en oeuvre de polyoléfines en mélange avec des polyalkènes du type MPO, ni les propriétés d'un tel mélange.

Le document US-4 438 228-A propose pour des tapis insonorisants, pour l'industrie automobile notamment, des mélanges d'oléfines, de plastifiants et de charges.

Le document WO 94/03537-A propose des produits moulés du type couvercles, tasses et récipients à parois fines, obtenus par extrusion suivie d'un moulage de différentes polyoléfines éthyléniques.

## Buts de l'invention

La présente invention vise en conséquence à améliorer encore les propriétés des polyoléfines et en particulier des produits du type mélange LLDPE avec EVA et/ou VLDPE.

On vise en particulier à compenser les mauvaises caractéristiques mécaniques par un polymère reconnu pour posséder un taux très élevé de charges admissible ainsi qu'un taux élevé de rétention d'huile.

La présente invention vise notamment à proposer des compounds chargés convenant pour les usages mentionnés par adjonction des produits à faible valeur ajoutée, soit vierges, soit provenant du recyclage de déchets industriels externes, en évitant les difficultés de rigidification, de caractéristiques inférieures, en particulier de fragilité, d'exsudation, de mise en forme délicate, d'absence de formabilité, de retrait ou de gauchissement.

En particulier, on vise à éviter les difficultés résultant du fait que des polymères d'addition provenant du recyclage de déchets entraînent des difficultés liées à l'absence de constance de qualité qu'il faudra donc pouvoir maîtriser.

La présente invention concerne des revêtements de sols, de murs, ou produits d'insonorisation résultant de la mise en oeuvre d'un mélange comprenant :

- des polyoléfines non-métallocènes à faible valeur ajoutée, du type LDPE, LLDPE, HDPE et/ou PP, ou des mélanges LLDPE avec du EVA et/ou VLDPE ;
- des charges inertes ;
- au moins un polymère dit « métallocène », de type copolymère de l'éthylène avec une alpha-oléfine $C_3$ à $C_{20}$ se caractérisant par un rapport d'indices de fluidité $I_{10}/I_2 >$ ou $= 5.63$, et une distribution moléculaire répondant à l'équation $M_w/M_n <$ ou $= (I_{10}/I_2)$-4.63, et une contrainte de cisaillement critique au début de la fracture globale à l'état fondu supérieure à 40N/cm$^2$ (4x10$^6$ dyne/cm$^2$).

caractérisés en ce que pour 100 parts de la totalité des polymères en présence, il y a 25 à 1000 parts desdites charges et en ce que le polymère dit « métallocène » représente 5 à 65 parts du total des 100 parts de la totalité des polymères présents dans le mélange.

## Description de formes d'exécution de l'invention

Une approche pour une solution est de compenser les mauvaises caractéristiques mécaniques par un polymère reconnu pour posséder un taux très élevé de charges admissible ainsi qu'un taux élevé de rétention d'huile.

On sait que les produits du type EPDM et EPM répondent à ces caractéristiques. Les EPDM sont des polymères d'éthylène copolymérisés avec des quantités élevées de propylène, par exemple 20 à 45% avec au maximum quelques pour-cent d'un monomère diène. Les EPM sont des produits du même type mais ne contenant pas de diène.

On sait qu'avec un taux de propylène supérieur à 30%, l'EPDM devient quasiment totalement amorphe, ce qui lui confère une cristallinité quasiment nulle. On dispose donc d'un produit à rétention d'huile très élevée et ceci compensera la perte intrinsèque de rétention d'huile des polymères trop cristallins, par exemple le LDPE, le LLDPE ou encore le HDPE ou le polypropylène, qui par suite de leur cristallinité, ne seraient pas en mesure de réaliser la rétention souhaitée d'une quantité d'huile importante.

En fait, une teneur élevée en huile est particulièrement intéressante pour les propriétés finales du fait qu'il s'agit d'un agent facilitant grandement la mise en oeuvre de produits chargés.

Ceci s'applique également dans le cas des produits qualifiés de "lubrifiants".

On peut prévoir que l'amélioration des performances des EPDM dépendra directement de leur souplesse, et bien entendu de leur masse moléculaire. En effet, si la masse moléculaire est trop faible, ce polymère ne sera pas en mesure de récupérer les faiblesses des autres polymères, le phénomène d'amélioration des propriétés mécaniques lorsque la masse moléculaire des polymères augmente étant bien connu.

C'est ainsi que des produits du type Vistalon 5600, constitués de 68% d'éthylène, 24% de propylène et 5% de diène, sont des produits qui manifestement, s'avèrent intéressants. Ces produits présentent comme caractéristique essentielle que leur masse moléculaire est particulièrement élevée. Pour des caoutchoucs du type EPDM, on définit l'importance des longueurs de chaînes des polymères par leur viscosité Mooney à 125 °C. Pour le Vistalon 5600, la valeur de la viscosité Mooney est de 75, ce qui correspond à un MFI équivalent à $\pm$ 0,1 (190 °C).

Bien qu'en principe, l'EPDM constitue un candidat idéal, il présente l'inconvénient d'être très cher (pratiquement le double du prix des produits du type VLDPE-EVA). De plus, du fait de sa très grande souplesse, le produit n'existe pas commercialement sous forme de granulés, et il est fourni en blocs. Il est donc difficile à doser et il est impossible de réaliser des mélanges par un système continu. Seuls des mélangeurs discontinus, par exemple des mélangeurs internes du type Banbury, permettent de traiter ce polymère. On peut donc dire que l'une de ses qualités se traduit par un inconvénient au niveau de la mise en oeuvre.

Sa très haute viscosité à l'état fondu, qui est nécessaire pour obtenir des propriétés finales satisfaisantes, rend très difficile la dispersion de ce polymère avec d'autres ingrédients à l'état fondu. Il en résulte des chutes de débit à la production et des retraits longitudinaux élevés. Ces retraits rendent nécessaire d'imposer des surlongueurs pour un produit thermoformé et dans certains cas, l'absence de stabilité dimensionnelle peut être rédhibitoire pour certaines applications du type revêtements de sol.

On peut donc considérer qu'il s'agit, lors de l'utilisation, d'un second inconvénient de ses qualités intrinsèques.

En pratique donc, dans de nombreux cas, les inconvénients l'emportent sur les avantages, ce qui empêche l'utilisation optimale basée sur l'introduction de polymères d'addition à faible valeur ajoutée.

La Demanderesse est donc partie d'un terpolymère dérivé des monomères éthylène, propylène diène (EPDM) de référence constitué par le Vistalon 5600 qui sert de produit de comparaison.

Le Vistalon 5600 est un EPDM à bas taux d'éthylène (68%) de basse densité (0,86) et très visqueux, c'est-à-dire présentant une viscosité Mooney à 125 °C égale à 75, ce qui donne un MFI (190 °C) équivalent à environ 0,1% à 0,2 g/10 min, c'est-à-dire une valeur très basse.

Une telle viscosité élevée dans des compounds tels que ceux envisagés selon l'invention engendre inévitablement des problèmes de compoundage (temps de mélange élevés) pour assurer la bonne dispersion du polymère trop visqueux, mais également des problèmes de stabilité dimensionnelle ou de retrait du produit fini, obtenu par exemple sous forme d'une feuille extrudée.

Il est apparu que des polymères du type dit "métallocène", c'est-à-dire en particulier des polymères obtenus par un catalyseur dit métallocène du type de ceux cités dans US 5 272 236-A, permettent d'atteindre au moins les propriétés de ce produit de référence, mais à moindre coût et dans des conditions d'utilisation plus favorables.

Ces produits se caractérisent par leur distribution étroite des masses moléculaires et la faible proportion de polymères ramifiés, ce qui leur confère des propriétés physiques spécifiques, en particulier de fluidité. Les catalyseurs de polymérisation dits « métallocènes » sont décrits dans cette publication.

L'invention propose des produits obtenus par calandrage ou extrusion qui sont constitués essentiellement de produits oléfiniques contenant un additif formé de polymère(s) du type métallocène et comportant de 25 à 1000 pcr (pourcentage en poids par rapport aux résines) de charges de préférence inertes, telles que la craie ou la baryte.

En plus de ces charges, les compositions mises en oeuvre peuvent comporter des adjuvants habituels, tels que des charges dites renforçantes et des adjuvants de processabilité ou d'ouvrabilité, des stabilisants thermiques et/ou des stabilisants à la lumière (UV), des pigments, des anti-oxydants, des agents de plastification, des lubrifiants, des agents de matification, des agents gonflants, des inhibiteurs de gonflement, des agents retardateur de flammes, anti-feu et anti-fumées, des agents de réticulation, des solvants ou diluants etc, en fonction des utilisations envisagées.

On utilise de préférence un agent de plastification qui est une huile minérale raffinée ou une huile synthétique et/ou des lubrifiants et additifs du type acide gras (tel que l'acide stéarique) ou du type oléate de métal (tel que le stéarate de calcium ou de zinc) ou l'érucamide.

Les polymères du type métallocène de manière générale, c'est-à-dire quelle que soit la nature des produits oléfiniques mis en oeuvre (en particulier les autres polyoléfines), agissent comme additifs et ils sont donc présents à une teneur de 5 à 65 pcr (pourcentage en poids par rapport aux résines), de préférence inférieure à 50 pcr.

En général, des valeurs comprises entre 10 et 50 pcr sont suffisantes pour des teneurs en charges minérales inertes comprises entre 25 et 1000 pcr. On constate qu'à des teneurs supérieures à 65 pcr, en présence des charges, on n'observe plus d'améliorations et plus souvent même, une dégradation des propriétés.

Un métallocène à 24% d'octène et 76% d'éthylène, produit commercialement par DuPont-Dow sous la dénomination Engage 8100 est moins souple (densité 0,87) et moins visqueux que l'EPDM correspondant (Vistalon 5600 - produit de référence), c'est-à-dire présentant un MFI de 1, ce qui fait une viscosité Mooney équivalente de 20 et il convient donc tout particulièrement.

Les produits oléfiniques non-métallocènes mis en oeuvre peuvent être des mélanges de produits du type LLDPE avec EVA et/ou VLDPE.

Ils peuvent être constitués totalement ou partiellement de ceux-ci à l'état de produits vierges ou de produits de recyclage.

Il peut s'agir également de composés oléfiniques du type ionomère, utilisés soit seuls, soit en présence d'autres polyoléfines. Ces produits présentent en général de très bonnes propriétés de résistance à l'abrasion. Leur mise en oeuvre qui s'effectue généralement par calandrage est cependant difficile, par suite d'un collage sur cylindres.

Il est apparu en particulier qu'un additif constitué de polymères du type métallocène facilite la compatibilité des constituants des compositions oléfiniques chargées, sans perte des propriétés mécaniques, en particulier sans perte de la résistance à l'abrasion, tout en pouvant assurer les performances de tenue à la chaleur grâce au choix judicieux d'un polymère métallocène à haute tenue mécanique à la chaleur.

Dans ce cadre, il est opportun de choisir un métallocène à haute cristallinité et à haut point de fusion.

Les propriétés finales d'un mélange avec le polymère métallocène sont particulièrement remarquables, notamment pour ce qui concerne la tenue à froid, la tenue à la chaleur, la résistance à la déchirure et la fragilité, et la formabilité. La résistance à la déchirure et la formabilité constituent des propriétés particulièrement surprenantes, car la viscosité est incomparablement plus faible que celle de l'EPDM.

De plus, la rétention d'huile est de manière étonnante aussi importante que celle que l'on observe avec des formules contenant l'EPDM ce qui est à nouveau surprenant car la cristallinité du polymère métallocène est plus élevée que celle de l'EPDM.

La mise en oeuvre est aisée, et les retraits longitudinaux sont diminués, ce qui résulte apparement de la réduction notable de la viscosité du polymère métallocène.

D'un point de vue pratique, ces produits sont livrés sous forme de granulés, ce qui implique un dosage plus aisé et la possibilité de travailler avec des mélangeurs continus sans cependant que l'utilisation d'un mélangeur discontinu soit exclue du cadre de l'invention.

Ces produits sont également beaucoup moins chers que l'EPDM. En fait, ils ne sont que de l'ordre de 5 à 10% plus chers que les VLDPE-EVA, alors que, l'EPDM atteint un doublement du coût par rapport à ces derniers produits.

Bien que l'on accorde généralement la préférence à un polymère métallocène résultant de la copolymérisation d'éthylène avec l'octène, il est également envisageable de recourir à des copolymères éthylènes avec l'hexène, le pentène ou le butène.

Le polymère métallocène mis en oeuvre présente de préférence une densité inférieure à 0,935, de préférence comprise entre 0,86 et 0,935 et plus particulièrement, de 0,87 à 0,935.

Son MFI est compris entre 0,1 et 30, des valeurs comprises de préférence entre 0,5 et 5 étant généralement choisies.

Ainsi qu'on l'a indiqué, on envisage d'utiliser des compounds chargés dans lesquels on introduit des polyoléfines à faible valeur ajoutée du type LDPE, LLDPE, HDPE ou PP, et dans ce cas, le taux de métallocène est compris entre 10 et 100%, et de préférence entre 20 et 200% de ce polymère à faible valeur ajoutée.

Les revêtements de sols ou de murs selon l'invention, sont en particulier ceux du type dit « compact ». Ces produits peuvent, de manière classique, être assemblés au départ d'une feuille calandrée avec d'autres feuilles ou films tels que des sous-couches ou « dossiers » de produits du type voiles de verre enduits et ils sont recouverts par des couches dites d'usure et de top-coating appliquées par enduction par exemple.

Les produits de l'invention peuvent en eux-mêmes servir à constituer ces autres constituants de l'assemblage, par exemple la couche d'usure ou la sous-couche, avantageusement en adaptant le taux de charges.

De même, pour des applications dans le secteur des véhicules automobiles, on peut réaliser des feuilles calandrées ou extrudées de différentes épaisseurs qui subissent un thermoformage pour constituer des éléments de garniture intérieure (contre-portes, etc).

Le terme calandrage doit s'entendre au sens large et couvre le laminage, le calandrage et l'enduction à chaud etc.

Il en est de même pour le terme extrusion, qui couvre toutes les variantes opératoires de techniques dites d'extrusion des polymères.

L'invention sera décrite plus en détails par des essais comparatifs en référence aux exemples qui suivent.

Exemples 1 à 14

Ces exemples illustrent des compositions qui peuvent, par exemple, être mises en oeuvre par calandrage ou par extrusion (pourcentage exprimé en poids).

Les produits : « Escorène », « Clearflex », « Dealen », « Vistalon », « Exact » et « Engage » sont des marques de produits du commerce.

En particulier :

-	Escorène 328 est un EVA à 28% de VA et un MFI de 3 ;
-	Clearflex MPDO est un VLDPE de densité 0,900 et de MFI de 7 ;
-	Dealen est une huile minérale raffinée non aromatique;
-	Exact et Engage sont des polymères du type métallocène du commerce produits respectivement par les sociétés Exxon et DuPont-Dow.
-	Les produits « déchets PE Sommer » sont des déchets de production de la demanderesse, constitués essentiellement de VLDPE (housses d'emballage de 200 $\mu$m) ;
-	Les produits « déchets SOULIER » sont des déchets de films d'emballage à très faible résistance à la traction de LDPE, destinés à l'emballage de pneus.

Dans tous les cas, le poids total de matières est de 371 g et le mélange a été réalisé dans des conditions identiques, à savoir dans un mélangeur interne de 2 1 de capacité.

Les résultats de déchirure non amorcée (DAN) et l'épaisseur mesurée des feuilles produites par calandrage sont convertis en valeurs DAN/mm qui sont reprises dans les Tableaux I à IV des exemples. Les Tableaux I et III sont des exemples de comparaison et les Tableaux II et IV, des exemples comparables respectivement aux exemples des Tableaux I et II.

Les propriétés (%E, densité et MFI -valeurs estimées pour les EPDM-) ainsi que la viscosité Mooney sont repris dans le Tableau V. Les produits les plus visqueux sont ceux à forte tendance au retrait provoquant les phénomènes de « curling ».

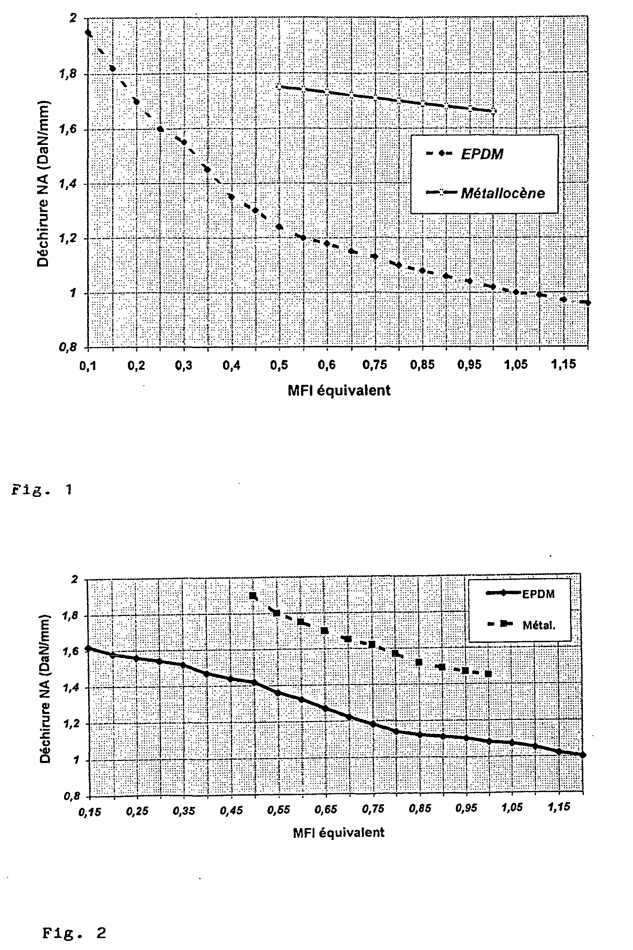

Les résultats des comparaisons des valeurs de déchirure NA (DAN/mm) en fonction du MFI équivalent pour les polymères EPDM et métallocènes des Tableaux I et II, sont repris à la Figure 1, celles des Tableaux III et IV sont repris à la Figure 2.

Exemple 15

L'utilisation d'un polymère métallocène avec une polyoléfine du type ionomère est illustrée par cet exemple.

Les compositions pondérales suivantes sont mises en oeuvre :

```
Métallocène
(Elite 5110 de la société DOW)        :60
Ionomère (Iotek 4200)                 :40
Craie industrie spéciale (2 µm)       :50
Irganox 1010                          :0,3
Additif de matification               :0-20
Lubrifiant interne/externe            :0,3
```

Elite 5110 présente une densité de 0,9255 et un MFI de 1, Iotek 4200 un MFI de 3.

On constate de très bonnes propriétés d'abrasion du produit et une bonne tenue à la chaleur à des températures supérieures à 100°C.

La mise en oeuvre est possible par calandrage ou extrusion.

TABLEAU I

| (exemples de comparaison) | | | | |
|---|---|---|---|---|
| N° d'exemple | 1 | 2 | 3 | 4 |
| Escorène 328 | 15,5 | 15,5 | 15,5 | 15,5 |
| Clearflex MPDO | 5 | 5 | 5 | 5 |
| Déchets PE Sommer | 20 | 20 | 20 | 20 |
| Craie Ind. Spéc. | 104 | 104 | 104 | 104 |
| Baryte C14 | 192 | 192 | 192 | 192 |
| Stéarine | 1,5 | 1,5 | 1,5 | 1,5 |
| Dealen | 21 | 21 | 21 | 21 |
| Vistalon 7800 | 12 | -- | -- | -- |
| Vistalon 805 | -- | 12 | -- | -- |
| Vistalon 808 | -- | -- | 12 | -- |
| Vistalon 5600 | -- | -- | -- | 12 |

TABLEAU I   (suite)

| (exemples de comparaison) | | | | |
|---|---|---|---|---|
| N° d'exemple | 1 | 2 | 3 | 4 |
| Déch. Na (DAN) | 1,72 | 2,17 | 2,83 | 3,73 |
| Epaisseur (mm) | 1,80 | 1,75 | 1,85 | 2,05 |
| Déch. NA (DAN/mm) | 0,96 | 1,24 | 1,53 | 1,82 |

TABLEAU II

| (exemples selon l'invention) | | | |
|---|---|---|---|
| N° d'exemple | 5 | 6 | 7 |
| Escorène 328 | 15,5 | 15,5 | 15,5 |
| Clearflex MPDO | 5 | 5 | 5 |
| Déchets PE Sommer | 20 | 20 | 20 |
| Craie Ind. Spéc. | 104 | 104 | 104 |
| Baryte C14 | 192 | 192 | 192 |
| Stéarine | 1,5 | 1,5 | 1,5 |
| Dealen | 21 | 21 | 21 |
| Engage 8150 | 12 | -- | -- |
| Engage 8100 | -- | 12 | -- |
| Engage 8200 | -- | -- | 12 |
| Déch. Na (DAN) | 2,68 | 2,42 | 1,82 |
| Epaisseur (mm) | 1,56 | 1,98 | 1,76 |
| Déch. NA (DAN/mm) | 1,72 | 1,22 | 1,03 |

TABLEAU III

| (exemples de comparaison) | | | | |
|---|---|---|---|---|
| N° d'exemple | 8 | 9 | 10 | 11 |
| Escorène 328 | 13,5 | 13,5 | 13,5 | 13,5 |
| Clearflex MPDO | 5 | 5 | 5 | 5 |
| Déchets SOULIER | 22 | 22 | 22 | 22 |
| Craie Ind. Spéc. | 104 | 104 | 104 | 104 |
| Baryte C14 | 192 | 192 | 192 | 192 |
| Stéarine | 1,5 | 1,5 | 1,5 | 1,5 |
| Dealen | 21 | 21 | 21 | 21 |
| Vistalon 7800 | 12 | -- | -- | -- |
| Vistalon 805 | -- | 12 | -- | -- |
| Vistalon 808 | -- | -- | 12 | -- |
| Vistalon 5600 | -- | -- | -- | 12 |
| Déch. Na (DAN) | 2,30 | 2,79 | 3,20 | 4,15 |
| Epaisseur (mm) | 2,20 | 1,96 | 2,10 | 2,56 |

TABLEAU III   (suite)

| (exemples de comparaison) | | | | |
|---|---|---|---|---|
| N° d'exemple | 8 | 9 | 10 | 11 |
| Déch. NA (DAN/mm) | 1,04 | 1,42 | 1,52 | 1,62 |

TABLEAU IV

| (exemples selon l'invention) | | | |
|---|---|---|---|
| N° d'exemple | 12 | 13 | 14 |
| Escorène 328 | 13,5 | 13,5 | 13,5 |
| Clearflex MPDO | 5 | 5 | 5 |
| Déchets SOULIER | 22 | 22 | 22 |
| Craie Ind. Spéc. | 104 | 104 | 104 |
| Baryte C14 | 192 | 192 | 192 |
| Stéarine | 1,5 | 1,5 | 1,5 |
| Dealen | 21 | 21 | 21 |
| Engage 8150 | 12 | -- | -- |
| Engage 8100 | -- | 12 | -- |
| Engage 8200 | -- | -- | 12 |
| Déch. Na (DAN) | 3,32 | 2,55 | 1,21 |
| Epaisseur (mm) | 1,77 | 1,78 | 1,50 |
| Déch. NA (DAN/mm) | 1,87 | 1,43 | 0,81 |

TABLEAU V

| MATIERES | %E | Densité | MFI (*2) | Mooney 125°C (*3) |
|---|---|---|---|---|
| **METALLOCENES** | | | | |
| Engage 8100 | 76 | 0,87 | 1 | 21 |
| Engage 8200 | 76 | 0,87 | 5 | 8 |
| Engage 8150 | 75 | 0,868 | 0,5 | 33 |
| **EPDM** | | | | |
| Vistalon 7800 | 79 | | 1,2 | 20 |
| Vistalon 805 | 78 | | 0,5 | 33 |
| Vistalon 808 | 78 | | 0,35 | 46 |
| Vistalon 5600 | 68,5 | | 0,15 | 75 |

**Revendications**

1. Revêtements de sols, de murs, ou produits d'insonorisation résultant de la mise en oeuvre d'un mélange comprenant :

   - des polyoléfines non-métallocènes à faible valeur ajoutée, du type LDPE, LLDPE, HDPE et/ou PP, ou des mélanges LLDPE avec du EVA et/ou VLDPE ;
   - des charges inertes ;
   - au moins un polymère dit « métallocène », de type copolymère de l'éthylène avec une alpha-oléfine $C_3$ à $C_{20}$

**se caractérisant par** un rapport d'indices de fluidité $I_{10}/I_2 >$ ou $= 5.63$, et une distribution moléculaire répondant à l'équation $M_w/M_n <$ ou $= (I_{10}/I_2)$-4.63, et une contrainte de cisaillement critique au début de la fracture globale à l'état fondu supérieure à $40N/cm^2$ ($4x10^6$ dyne/cm$^2$).

**caractérisés en ce que** pour 100 parts de la totalité des polymères en présence, il y a 25 à 1000 parts desdites charges et **en ce que** le polymère dit « métallocène » représente 5 à 65 parts du total des 100 parts de la totalité des polymères présents dans le mélange.

**2.** Revêtements de sols, de murs, ou produits d'insonorisation selon la revendication 1, **caractérisés en ce que** le polymère dit « métallocène » est obtenu par copolymérisation de l'éthylène avec l'octène.

**3.** Revêtements de sols, de murs, ou produits d'insonorisation selon la revendication 1 ou 2, **caractérisés en ce que** le polymère dit « métallocène » est obtenu par copolymérisation de l'éthylène avec un hexène, un pentène ou un butène.

**4.** Revêtements de sols, de murs, ou produits d'insonorisation selon l'une quelconque des revendications précédentes, **caractérisés en ce que** le polymère dit « métallocène » présente une densité inférieure à 0.935, de préférence comprise entre 0,86 et 0,935, et plus particulièrement entre 0,87 et 0,935.

**5.** Revêtements de sols, de murs, ou produits d'insonorisation selon la revendication 1, **caractérisés en ce que** ceux-ci comprennent en outre des agents gonflants et/ou des inhibiteurs de gonflement

**6.** Revêtements de sols, de murs, ou produits d'insonorisation selon l'une quelconque des revendications précédentes, **caractérisés en ce que** le polymère dit « métallocène » a un MFI compris entre 0.1 et 30, de préférence entre 0.5 et 5.

**7.** Revêtements de sols, de murs, ou produits d'insonorisation selon l'une quelconque des revendications précédentes, **caractérisés en ce que** lesdites charges inertes sont sélectionnées parmi la craie ou la barytes.

**8.** Revêtements de sols, de murs, ou produits d'insonorisation selon l'une quelconque des revendications précédentes, **caractérisés en ce que** le mélange comprend en outre un agent de plastification et/ou de lubrification.

**9.** Revêtements de sols, de murs, ou produits d'insonorisation selon la revendication 8, **caractérisés en ce que** l'agent de plastification est sélectionné parmi le groupe des huiles minérales raffinées, des huiles synthétiques et/ou des lubrifiants et additifs du type acide gras (tel que l'acide stéarique) ou du type oléate de métal (tel que le stéarate de calcium ou de zinc) ou l'érucamide.

**Patentansprüche**

**1.** Bodenbeläge, Wandverkleidungen oder Schalldämmungsprodukte aus einer Mischung von:

A. nicht metallocenen Polyolefinen mit einem schwachen Mehrwert vom Typ LDPE, LLDPE, HDPE und/oder PP oder Mischungen LLDPE mit EVA und/oder VLDPE;
B. Inert-Füllstoffen;
C. mindestens einem sogenannten "metallocenen" Polymer vom Typ Ethylencopolymer mit einem Alpha-Olefin $C_3$ bis $C_{20}$, das sich durch ein Schmelzindex-Verhältnis $I_{10}/I_2 >$ oder $= 5.63$ und durch eine molekulare Verteilung, die der Gleichung $M_w/M_n <$ oder $= (I_{10}/I_2) - 4.63$ entspricht, und durch eine Schubspannung am Anfang der globalen Fraktur in geschmolzenem Zustand von mehr als $40N/cm^2$ ($4x10^6$ dyne/cm$^2$) auszeichnet.

**dadurch gekennzeichnet, dass** für 100 Teile der gesamten vorhandenen Polymere 25 bis 1000 Teile der besagten Füllstoffe bestehen, und dass das sogenannte "metallocene" Polymer 5 bis 65 Teile der gesamten 100 Teile aller in der Mischung vorhandenen Polymere darstellt.

**2.** Bodenbeläge, Wandverkleidungen oder Schalldämmungsprodukte gemäß dem Anspruch 1, **dadurch gekennzeichnet, dass** das sogenannte "metallocene" Polymer durch Copolymerisation von Ethylen mit Okten entsteht.

**3.** Bodenbeläge, Wandverkleidungen oder Schalldämmungsprodukte gemäß den Ansprüchen 1 oder 2, **dadurch**

**gekennzeichnet, dass** das sogenannte "metallocene" Polymer durch Copolymerisation von Ethylen mit einem Hexen, einem Penten oder einem Buten entsteht.

4. Bodenbeläge, Wandverkleidungen oder Schalldämmungsprodukte gemäß einem der oben genannten Ansprüche, **dadurch gekennzeichnet, dass** das sogenannte "metallocene" Polymer eine Dichte von weniger als 0,935, vorzugsweise zwischen 0,86 und 0,935 und besonders zwischen 0,87 und 0, 935 aufweist.

5. Bodenbeläge, Wandverkleidungen oder Schalldämmungsprodukte gemäß dem Anspruch 1, **dadurch gekennzeichnet, dass** sie u.a. Quellmittel und/oder Quellverzögerer enthalten.

6. Bodenbeläge, Wandverkleidungen oder Schalldämmungsprodukte gemäß einem der oben genannten Ansprüche, **dadurch gekennzeichnet, dass** das sogenannte "metallocene" Polymer einen MFI zwischen 0,1 und 30 und vorzugsweise zwischen 0,5 und 5 aufweist.

7. Bodenbeläge, Wandverkleidungen oder Schalldämmungsprodukte gemäß einem der oben genannten Ansprüche, **dadurch gekennzeichnet, dass** die besagten Inert-Füllstoffe zwischen Kreide und Baryt ausgewählt werden.

8. Bodenbeläge, Wandverkleidungen oder Schalldämmungsprodukte gemäß einem der oben genannten Ansprüche, **dadurch gekennzeichnet, dass** die Mischung u.a. ein Plastifizierungs- und/oder Schmiermittel enthält.

9. Bodenbeläge, Wandverkleidungen oder Schalldämmungsprodukte gemäß dem Anspruch 8, **dadurch gekennzeichnet, dass** das Plastifizierungsmittel aus der Gruppe der raffinierten Mineralöle, der synthetischen Öle und/oder der Schmiermittel und Zusätze vom Typ Fettsäure (z.B. Stearinsäure) oder vom Typ Metalloleat (z.B. Kalzium- oder Zinkstearat) oder Erucamide ausgewählt werden.

**Claims**

1. Floor or wall coverings or insulation products resulting from the implementation of a mixture comprising:

    - non-metallocene polyolefins with low added value of type LDPE, LLDPE, HDPE and/or PP, or mixtures of LLDPE with EVA and/or VLDPE;
    - inert fillers;
    - at least one polymer called "metallocene" of an ethylene copolymer type with an alpha olefin $C_3$ to $C_{20}$ **characterised by** a ratio of the fluidity indexes $I_{10}/I_2 >$ or $= 5.63$, and a molecular distribution corresponding to the equation $M_w/M_n <$ or $= (I_{10}/I_2)-4.63$, and a critical shear stress at the start of the global fracture in the molten state higher than 40N/cm$^2$, (4x10$^6$ dyne/cm$^2$) .

    **characterised in that** per 100 parts of the total polymers present, there are 25 to 1,000 parts of said fillers and **in that** the "metallocene" polymer represents 5 to 65 parts of the total 100 parts of the total polymers present in the mixture.

2. Floor or wall coverings or insulation products according to Claim 1, **characterised in that** the "metallocene" polymer is obtained by copolymerisation of the ethylene with the octene.

3. Floor or wall coverings or insulation products according to Claim 1 or 2, **characterised in that** the "metallocene" polymer is obtained by copolymerisation of the ethylene with an hexene, a pentene or a butene.

4. Floor or wall coverings or insulation products according to any one of the preceding claims, **characterised in that** the "metallocene" polymer has a density lower than 0.935, preferably between 0.86 and 0.935, and more particularly between 0.87 and 0.935.

5. Floor or wall coverings or insulation products according to Claim 1, **characterised in that** these further comprise blowing agents and/or blowing inhibitors.

6. Floor or wall coverings or insulation products according to any one of the preceding claims, **characterised in that** the "metallocene" polymer has an MFI between 0.1 and 30, preferably between 0.5 and 5.

7. Floor or wall coverings or insulation products according to any one of the preceding claims, **characterised in that** said inert fillers are selected from chalk or baryte.

8. Floor or wall coverings or insulation products according to any one of the preceding claims, **characterised in that** the mixture also comprises a plasticising and/or lubrication agent.

9. Floor or wall coverings or insulation products according to Claim 8, **characterised in that** the plasticising agent is selected from the group of refined mineral oils, synthetic oils and/or lubricants and additives of the fatty acid type (such as stearic acid) or of the metal oleate type (such as calcium or zinc stearate) or erucamide.

Fig. 1

Fig. 2